# EUROPÄISCHE PATENTANMELDUNG

(11) **EP 3 960 704 A1**
(43) Veröffentlichungstag der Anmeldung: **02.03.2022**
(21) Anmeldenummer: 21192589.6
(22) Anmeldetag: 23.08.2021
(51) Int. Cl.: C01B 21/087, C06B 21/00

(54) **VERFAHREN ZUR HERSTELLUNG VON PARTIKELN AUS OXIDATORSALZEN AUS DER GRUPPE DER DINITRAMIDE**

(30) Priorität: 26.08.2020 DE 102020122328
(71) Anmelder: Fraunhofer-Gesellschaft zur Förderung der angewandten Forschung e.V., 80686 München (DE)
(72) Erfinder: Heintz, Thomas, 76327 Pfinztal (DE); Reinhard, Werner, 76327 Pfinztal (DE); Mitró, Daniel, 76327 Pfinztal (DE); Herrmannsdörfer, Dirk, 76327 Pfinztal (DE); Schaller, Uwe, 76327 Pfinztal (DE); Löbbecke, Stefan, 76327 Pfinztal (DE)
(74) Vertreter: Lichti - Patentanwälte Partnerschaft mbB

(57) **Zusammenfassung**

Es wird ein Verfahren zur Herstellung von Partikeln aus Oxidatorsalzen aus der Gruppe der Dinitramide, insbesondere Ammonium- (ADN), Kalium- (KDN) und Guanlyureadinitramid (KUDN), vorgeschlagen, welches die folgenden Schritte umfasst:
(a) Lösen des Dinitramids in wenigstens einem Lösungsmittel aus der Gruppe Wasser und Ammoniak unter Erhalt einer Lösung des Dinitramids;
(b) anschließendes Abkühlen der Lösung des Oxidatorsalzes auf eine Temperatur unterhalb des Gefrierpunktes des wenigstens einen Lösungsmittels, so dass das Lösungsmittel in fester Phase vorliegt, um die Partikel des Dinitramids auszukristallisieren; und
(c) anschließendes Sublimieren von zumindest einem Anteil des wenigstens einen, in der festen Phase vorliegenden Lösungsmittels, um die Partikel des Dinitramids zu erhalten.

## Beschreibung

Die Erfindung betrifft ein Verfahren zur Herstellung von Partikeln aus Oxidatorsalzen aus der Gruppe der Dinitramide.

Oxidatorsalze der vorgenannten Art, welche neben einem Dinitriamid-Anion

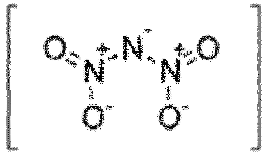

verschiedene Kationen umfassen können, wie beispielsweise ein Ammonium-Kation (NH₄⁺), ein Natrium-Kation (Na⁺), ein Kalium-Kation (K⁺), ein Guanylharnstoff-Kation (C₂H₇N₄O⁺) oder dergleichen, finden insbesondere in Festtreibstoffen sowohl im zivilen als auch im militärischen Bereich, wie insbesondere in Festtreibstoffen für Raumflugkörper (Raketen) und für strategische Waffensysteme, aber auch in Treibsätzen für Rohrwaffen oder in Sprengstoffsystemen, verbreiteten Einsatz. In der Anwendung sind sowohl für die Herstellung als auch für die Verarbeitung Partikel mit einer möglichst kompakten Morphologie, einer hohen Dichte und Reinheit sowie eine hohen sowohl chemischen als auch thermischen Langzeitstabilität erwünscht.

Bei der Herstellung von gattungsgemäßen Oxidatorsalzen aus der Gruppe der Dinitramide entstehen indes in der Regel sehr unregelmäßige Partikel, weshalb kommerziell verfügbare Rohmaterialien solcher Oxidatorsalze in der Regel keine hinreichende Qualität für die Weiterverarbeitung besitzen. Ihre hygroskopischen Salzkristalle neigen sehr stark zur Agglomeration und können vornehmlich aufgrund ihrer hohen Reib- und Schlagempfindlichkeit aus Sicherheitsgründen nicht direkt weiterverarbeitet oder gefahrlos zerkleinert werden. Aus diesem Grund müssen agglomerierte Rohmaterialien der Oxidatorsalze zur Weiterverarbeitung zunächst komplett gelöst werden. Darüber hinaus handelt es sich bei den Oxidatorsalzen um hochpreisige Gefahrgüter, weshalb hohe Ausbeuten aus wirtschaftlichen Gründen und Umweltaspekten notwendig sind.

Die Korneigenschaften von Oxidatorsalzen aus der Gruppe der Dinitramide, wie insbesondere deren Kornform, lassen sich vielfach durch Umkristallisation der kristallinen Oxidatorsalze aus einer Lösung verbessern. Hierbei wird das Oxidatorsalz zumeist unter Erwärmen in einem oder mehreren geeigneten Lösungsmitteln gelöst und durch definiertes Abkühlen auskristallisiert. Dieser Vorgang kann gegebenenfalls mehrfach durchgeführt werden. Infolge der Löslichkeitsunterschiede zwischen dem Oxidatorsalz und etwaigen Verunreinigungen werden unerwünschte Begleitstoffe abgetrennt, weil sie entweder von vornherein ungelöst bleiben, oder weil sie, wenn sie ebenfalls in Lösung gehen, aufgrund ihrer geringen Konzentration in der Matrixflüssigkeit verbleiben, wenn das Kristallisat bereits ausgefallen ist. Darüber hinaus ist das Impfen von übersättigten Lösungen oder unterkühlter Schmelzen von Oxidatorsalzen aus der Gruppe der Dinitramide bekannt, wobei Spuren von Festsubstanz in Form von Keimen, welche die Bildung der festen Phase auszulösen vermögen, zugegeben werden. Allerdings konnten derartige Kristallisationsverfahren aus Lösungen wegen des ausgeprägten Nadelwachstums der Kristalle bislang im technischen Maßstab nur bedingt und für einige Oxidatorsalze praktisch gar nicht realisiert werden, wobei insbesondere Ammoniumdinitramid (ADN), aber auch Kaliumdinitramid (KDN) und Guanylharnstoff- bzw. Guanylureadinitramid (GUDN) erwähnt sei, welche zu sehr unregelmäßigen, nadelförmigen Salzkristallen kristallisieren.

Zur großtechnischen Herstellung von Partikeln aus solchen Oxidatorsalzen mit einem Dinitramid-Anion, wie insbesondere Ammoniumdinitramid (ADN), kommen daher gegenwärtig praktisch ausschließlich sogenannte Prilling-Prozesse zum Einsatz, bei welchen das Rohmaterial zunächst geschmolzen wird und diese Schmelzen anschließend über Zerstäubungsoder Emulsionsprozesse dispergiert werden. So beschreibt beispielsweise die EP 0 953 555 A1 ein Verfahren zur Herstellung von sphärischen Partikeln aus schmelzfähigen, feuchtigkeitsempfindlichen Oxidatorsalzen in Form von Ammoniumdinitramid (ADN), wobei das kristalline Ammoniumdinitramid geschmolzen und in einer Matrixflüssigkeit, in welcher es nicht oder nur schwer löslich ist, emulgiert wird. Zur Kristallisation der dispersen Tropfen zu festen Partikeln wird die Emulsion unter den Schmelzpunkt abgekühlt und das in Kugelform ausfallende Kristallisat von der Matrixflüssigkeit abgetrennt. Zwar führt das bekannte Verfahren zu relativ gleichmäßigen und kompakten Partikeln mit einer hohen Qualität für die Weiterverarbeitung, doch besteht ein Nachteil insbesondere darin, dass das Ammoniumdinitramid einerseits geschmolzen werden muss und somit einer hohen thermischen Belastung mit stärkerer Zersetzung ausgesetzt ist, was mit Qualitätsverlusten einhergeht. Andererseits ist das Ammoniumdinitramid während des Emulgierens, beispielsweise mittels Rührern, relativ hohen Scherkräften ausgesetzt, was aufgrund der hohen Reib- und Schlagempfindlichkeit des Oxidatorsalzes ein Sicherheitsrisiko während der Verarbeitung darstellt.

Darüber hinaus sind zur Herstellung anderer Oxidatorsalze, bei welchen sich die vorgenannte Problematik allenfalls nur bedingt stellt, weitere Herstellungsverfahren bekannt, welche einen Verfahrensschritt der Gefriertrocknung umfassen. So beschreibt der Aufsatz von Andrey G. Ogienko et al.: "Preparation of fine powders by clathrate-forming freeze-drying: A case study of ammonium nitrate", Mendeleev Commun. 2018, 28, 211-213 ein Verfahren zur Herstellung von Partikeln aus dem Oxidatorsalz Ammoniumnitrat (AN), indem das Ammoniumnitrat in einer Lösungsmittelmischung aus Tetrahydrofuran (THF) und Wasser gelöst wird, wonach die Lösung gefriergetrocknet wird, um hierbei das Lösungsmittel unter Erhalt eines feinen Ammoniumnitratpulvers zu sublimieren. Aus der US 3 452 445 A ist ein Verfahren zur Herstellung von Partikeln aus dem Oxidatorsalz Ammoniumperchlorat (AP) bekannt, indem das Ammoniumperchlorat in einem Lösungsmittel, wie z.B. Wasser, gelöst wird, wonach die Lösung wiederum erstarrt und das Lösungsmittel unter Erhalt des festen Oxidatorsalzes sublimiert wird. Der US 3 888 017 A ist ein Verfahren zur Herstellung von Partikeln aus weiteren Oxidatorsalzen, wie insbesondere Ammoniumperchlorat (AP), Ammoniumnitrat (AN) und Kaliumnitrat (KN), zu entnehmen, indem das Oxidatorsalz wiederum in einem Lösungsmittel gelöst wird, wonach die Lösung in Form von feinen Tropfen versprüht wird, wobei die Tropfen auf einen Flüssigkeitsfilm aus einer Quench-Flüssigkeit, z.B. in Form von flüssigem Stickstoff, auftreffen, so dass das Oxidatorsalz nach Eindringen der Tropfen der Lösung in die Quench-Flüssigkeit auskristallisieren. Von den derart erhaltenen Partikeln des Oxidatorsalzes werden schließlich das Wasser sowie Reste der Quench-Flüssigkeit sublimiert. In der US 2002/0098143 A1 geht es um ein ähnliches Verfahren zur Herstellung von Partikeln aus phasenstabilisiertem Ammoniumnitrat (AN), indem das Ammoniumnitrat zunächst in Gegenwart eines Phasenstabilisators in einer inerten Flüssigkeit gelöst wird. Sodann wird die Lösung in Form von feinen Tropfen versprüht und werden die Tropfen der Lösung gefriergetrocknet, um die phasenstabilisierten AN-Partikel zu erhalten. Während als Lösungsmittel insbesondere Wasser verwendet werden kann, kommen als Phasenstabilisatoren andere Oxidatorsalze, wie Kaliumnitrat (KN), zum Einsatz. Ferner beschreibt die US 3 892 610 A ein Verfahren zur Herstellung von Feinpartikeln aus Ammoniumperchlorat (AP), indem eine wässrige Lösung des Ammoniumperchlorats gefroren und das Lösungsmittel sublimiert wird. Die Lösung wird dabei in einer weder mit dem Lösungsmittel selbst noch mit Ammoniumperchlorat mischbaren organischen Flüssigkeit emulgiert, wobei der Emulsion einerseits ein Emulgator in Form von HTPB, andererseits Stabilisatoren in Form eines Diesters und einer Dicarbonsäure zugesetzt werden, wonach das organische Lösungsmittel gemeinsam mit dem Lösungsmittel sublimiert wird.

Der Erfindung liegt die Aufgabe zugrunde, ein einfaches und kostengünstiges Verfahren zur Herstellung von Partikeln aus Oxidatorsalzen aus der Gruppe der Dinitramide vorzuschlagen, mittels welchem unter zumindest weitestgehender Vermeidung der vorgenannten Nachteile kompakte und im Wesentlichen gleichförmige Partikel, insbesondere mit abgerundeter Morphologie, erhalten werden können.

Erfindungsgemäß wird diese Aufgabe mit einem Verfahren zur Herstellung von Partikeln aus Oxidatorsalzen aus der Gruppe der Dinitramide gelöst, welches die folgenden Schritte umfasst:
(a) Lösen des Dinitramids in wenigstens einem Lösungsmittel aus der Gruppe Wasser und Ammoniak unter Erhalt einer Lösung des Dinitramids;
(b) anschließendes Abkühlen der Lösung des Dinitramids auf eine Temperatur unterhalb des Gefrierpunktes des wenigstens einen Lösungsmittels, so dass das wenigstens eine Lösungsmittel in fester Phase vorliegt, um die Partikel des Dinitramids auszukristallisieren; und
(c) anschließendes Sublimieren von zumindest einem Anteil des wenigstens einen, in der festen Phase vorliegenden Lösungsmittels, um die Partikel des Dinitramids zu erhalten.

Das erfindungsgemäße Verfahren, welches sowohl ein Schmelzen des Dinitramids als auch mechanische Einwirkungen auf dasselbe, wie beispielsweise mittels Rührern oder anderer beweglicher Bauteile, entbehrlich macht, sieht folglich vor, dass das jeweilige Dinitramid oder eine Mischung aus mehreren Dinitramiden oder aus wenigstens einem Dinitramid mit anderen Oxidatorsalzen in einem Schritt (a) zunächst in einem oder mehreren Lösungsmitteln aus der Gruppe Wasser und Ammoniak gelöst wird, wobei eine Lösung des Dinitramids erhalten wird, wie es als solches auch aus dem eingangs geschilderten Stand der Technik bekannt ist. Sodann wird in einem Schritt (b) die Lösung des Dinitramids auf eine Temperatur unterhalb des Gefrierpunktes des wenigstens einen Lösungsmittels abgekühlt, um eine erstarrte Lösung des Dinitramids zu erhalten, was mittels beliebiger bekannter Einrichtungen, wie beispielsweise mittels einer Gefriertrocknungsanlage, geschehen kann. Hierbei wurde beobachtet, dass sich diskrete Partikel des Dinitramids bilden, welche in die im festen Zustand befindliche Lösungsmittelmatrix eingebettet sind, wobei die Keimbildung und das Kristallwachstum durch das eingestellte Temperaturprofil während des Abkühlens individuell eingestellt werden kann. In einem abschließenden Schritt (c) wird sodann zumindest ein Anteil des wenigstens einen Lösungsmittels der erstarrten Lösung des Dinitramids oder auch das gesamte Lösungsmittel sublimiert, wobei durch den direkten Übergang des wenigstens einen Lösungsmittels von der festen Phase in die Gasphase zumindest temporär, so lange die flüssige Phase des wenigstens einen Lösungsmittels unterdrückt wird, eine Agglomeration der Partikel des Dinitramids verringert bzw. im Wesentlichen gänzlich verhindert wird und die zuvor während des Erstarrens des Lösungsmittels erzeugten Partikel des Dinitramids konserviert und gewonnen werden können. Sobald das wenigstens eine Lösungsmittel praktisch vollständig entfernt worden ist, ergibt sich eine Ausbeute an Partikeln des Dinitramids von praktisch 100%, wobei die Partikel eine sehr hohe Dichte und Reinheit besitzen und, wie weiter unten unter Bezugnahme auf die Ausführungsbeispiele noch näher erläutert, insbesondere nahezu sphärische Partikel oder zumindest Partikel mit einer abgerundeten Morphologie erhalten werden. Das erfindungsgemäße Verfahren bietet sich dabei in idealer Weise, wenngleich nicht ausschließlich, für das bislang nur schwer verarbeitbare Oxidatorsalz Ammoniumdinitramid (ADN) an, welches stark hygroskopisch ist und zur Bildung von sehr unregelmäßigen, nadelförmigen Kristallen neigt.

Anlässlich des Lösens des Dinitramids in dem wenigstens einen Lösungsmittel aus der Gruppe Wasser und Ammoniak gemäß Schritt (a) kann zweckmäßigerweise eine im Wesentlichen gesättigte Lösung des Dinitramids in dem wenigstens einen Lösungsmittel erzeugt werden.

Das Abkühlen der Lösung des Dinitramids auf eine Temperatur unterhalb des Gefrierpunktes des wenigstens einen, im festen Zustand vorliegenden Lösungsmittels gemäß Schritt (b), um die Partikel des Dinitramids auszukristallisieren, kann vorzugsweise bei Umgebungsdruck oder bei einem demgegenüber erhöhten Druck erfolgen. Indes besteht grundsätzlich die Möglichkeit, die Temperatur bzw. den Temperaturgradienten und/oder den Druck bzw. den Druckgradienten, welcher auch während der Kristallbildung des Dinitramids gemäß Schritt (b) unterhalb dem Umgebungsdruck gewählt werden kann, individuell zu verändern und auf diese Weise die Größe und Form der erzeugten Partikel aus dem bzw. den jeweiligen Dinitramid(en) einzustellen. Hierbei kann beispielsweise eine langsame Abkühlung zu einem vermehrten Kristallwachstum beitragen, wohingegen eine schnelle Abkühlung zu einer spontaneren Erzeugung einer Vielzahl von Kristallisationskeimen führt, welche zu kleineren Partikeln des Dinitramids führen.

Der zumindest eine Anteil des wenigstens einen, in der festen Phase vorliegenden Lösungsmittels gemäß Schritt (c) wird zweckmäßigerweise durch Anlegen eines Unterdruckes gegenüber der Umgebung sublimiert, wobei an das die auskristallisierten Partikel des Dinitramids enthaltende, wenigstens eine Lösungsmittel im festen Zustand insbesondere im Wesentlichen Vakuum angelegt werden kann. Um für eine relativ schnelle Sublimation des wenigstens einen Lösungsmittels zu sorgen, kann es sich ferner als zweckmäßig erweisen, wenn die Lösung gemäß Schritt (a) in dünnen Filmen mit folglich großer Oberfläche bereitgestellt wird, welche anlässlich des Abkühlens gemäß Schritt (b) zu dünnen Platten erstarrt, so dass für die Sublimation des wenigstens einen Lösungsmittels gemäß Schritt (c) eine große Stoffaustauschfläche (fest/gasförmig) zur Verfügung steht.

Gemäß einer Ausführungsvariante des erfindungsgemäßen Verfahrens kann vorgesehen sein, dass das wenigstens eine Lösungsmittel gemäß Schritt (c) im Wesentlichen vollständig sublimiert wird. Hiermit ist gemeint, dass das wenigstens eine Lösungsmittel praktisch vollständig von den auskristallisierten Partikeln des Dinitramids abgetrennt wird, ohne es auch nur temporär in die flüssige Phase zu überführen, d.h. der Phasenübergang des Lösungsmittels geschieht praktisch vollständig von fest zu gasförmig. Bei einer solchen Verfahrensführung wurde beobachtet, dass die erzeugten Partikel des Dinitramids sehr hohe Dichten sowie eine sehr hohe thermische Stabilität aufweisen, wobei insbesondere keine Zersetzung des Dinitramids stattfindet.

In diesem Zusammenhang kann es sich als vorteilhaft erweisen, wenn der Unterdruck und/oder die Temperatur zumindest temporär derart eingestellt wird, dass sich das wenigstens eine Lösungsmittel unmittelbar unterhalb seines Phasenübergangs von der festen in die flüssige Phase befindet, wobei beobachtet wurde, dass in diesem Fall vornehmlich im Wesentlichen sphärische Partikel des Dinitramids mit einer abgerundeten, aber gleichwohl sehr kompakten Morphologie erzeugt werden können. Die eingestellte Temperatur bei dem jeweils eingestellten Unterdruck kann dabei beispielsweise zumindest temporär wenige °C, z.B. etwa 0,1° bis etwa 5°C, unterhalb des Phasenübergangs von der festen in die flüssige Phase des wenigstens einen Lösungsmittels bei dem herrschenden Druck gehalten werden, wobei es sich als vorteilhaft erwiesen kann, wenn die Sublimation stufenweise bei verschiedenen Temperaturen und/oder Unterdrücken erfolgt, wobei z.B. anfänglich eine relativ niedrige Temperatur mit einem relativ geringen Druck, wie beispielsweise im Wesentlichen Feinvakuum, eingestellt wird, um zunächst möglichst große Mengen an Lösungsmittel "schnell" zu sublimieren, wonach die Temperatur und/oder der Druck auf ein Niveau knapp unterhalb des Phasenübergangs von der festen in die flüssige Phase des wenigstens einen Lösungsmittels erhöht wird, um den restlichen Anteil des Lösungsmittels "langsamer" zu sublimieren und dabei weitgehend sphärische Partikel des Dinitramids zu erzeugen. Hierbei ist es ebenfalls denkbar, die Temperatur und/oder den Unterdruck, z.B. in periodischen Zyklen, zwischen den beiden vorgenannten Zuständen zu variieren.

Um etwaige, an den gemäß dem Verfahrensschritt (c) erhaltenen Dinitramid-Partikeln anhaftende Lösungsmittelreste sicher und zuverlässig zu entfernen und auf diese Weise für eine größtmögliche Reinheit der Partikel zu sorgen, kann ferner vorzugsweise vorgesehen sein, dass die gemäß Schritt (c) erhaltenen Partikel des Dinitramids nach dem Sublimieren des wenigstens einen Lösungsmittels in wenigstens einem organischen Lösungsmittel gewaschen werden, wobei sie insbesondere zunächst in wenigstens einem ersten polaren organischen Lösungsmittel und sodann in wenigstens einem zweiten unpolaren organischen Lösungsmittel gewaschen werden. Der Waschschritt erfolgt hierbei bei einer Temperatur, bei welcher das wenigstens eine Lösungsmittel aus der Gruppe Wasser und Ammoniak (wieder) in der flüssige Phase vorliegt, z.B. im Wesentlichen bei Raumtemperatur. Während der erste Waschschritt mit dem wenigstens einen ersten polaren organischen Lösungsmittel, welches beispielsweise aus der Gruppe der Alkohole, Ketone, Lactame, Lactone, Nitrile, Sulfone, Sulfoxide und dergleichen gewählt sein kann und welches zweckmäßigerweise ein geringeres Lösungsvermögen für das jeweilige Dinitramid als Wasser und Ammoniak besitzt, aber hiermit sehr gut mischbar ist, zur praktisch vollständigen Entfernung des wenigstens einen Wasser und/oder Ammoniak enthaltenden Lösungsmittels dient, dient der zweite Waschschritt mit dem wenigstens einen zweiten unpolaren organischen Lösungsmittel, in welchem das Dinitramid nur sehr schlecht oder nahezu nicht löslich ist und welches z.B. aus der Gruppe der Alkane, Alkene, aromatischen Kohlenwasserstoffverbindungen, Ester und dergleichen gewählt sein kann, zur im Wesentlichen vollständigen Entfernung des ersten polaren organischen Lösungsmittels, welches andernfalls, sofern es an den frischen Dinitramid-Partikeln zurückbliebe, wieder zu einem oberflächigen Inlösunggehen des Dinitramids führen könnte. Etwaige Reste des zweiten unpolaren Lösungsmittels können auf praktisch beliebige bekannte Weise entfernt werden, wie z.B. mittels Vakuumtrocknung bei moderaten Temperaturen von vorzugsweise höchstens etwa 60°C, insbesondere von höchstens etwa 50°C.

Gemäß einer alternativen Ausführungsvariante des erfindungsgemäßen Verfahrens kann vorgesehen sein, dass nur ein Anteil des wenigstens einen Lösungsmittels gemäß Schritt (c) vollständig sublimiert wird, wonach
- ein weiterer Anteil des wenigstens einen Lösungsmittels, insbesondere durch Erhöhen des Unterdruckes auf ein Druckniveau und/oder durch Erhöhen der Temperatur auf ein Temperaturniveau, bei welchem das wenigstens eine Lösungsmittel in der flüssigen Phase vorliegt, verdampft wird, wie beispielsweise mittels Vakuum- oder Sprühtrocknung; und/oder
- die erhaltenen Partikel des Dinitramids nach dem Sublimieren des Anteils des wenigstens einen Lösungsmittels und gegebenenfalls nach Verdampfen des weiteren Anteils des wenigstens einen Lösungsmittels in wenigstens einem organischen Lösungsmittel gewaschen werden, wobei sie insbesondere zunächst in wenigstens einem ersten polaren organischen Lösungsmittel und sodann in wenigstens einem zweiten unpolaren organischen Lösungsmittel gewaschen werden.

Im erstgenannten Fall kann bei einer solchen stufenweisen Sublimation/Verdampfung des wenigstens einen Lösungsmittels beispielsweise wiederum zunächst ein Anteil, vorzugsweise der überwiegende Anteil, des wenigstens einen Lösungsmittels durch Sublimation von den auskristallisierten Partikeln des Dinitramids abgetrennt werden, wonach der Unterdruck und/oder die Temperatur zumindest temporär derart eingestellt wird, dass das wenigstens eine Lösungsmittel zumindest teilweise in die flüssige Phase überführt wird, wobei es insbesondere an dem oder knapp oberhalb des Phasenübergang(s) fest/flüssig gehalten werden kann. Auch in diesem Fall ist es denkbar, die Temperatur und/oder den Unterdruck, z.B. in periodischen Zyklen, zwischen den beiden vorgenannten Zuständen zu variieren. Bei einer solchen Verfahrensführung wurde beobachtet, dass die erzeugten Partikel des Dinitramids sehr gleichmäßig mit abgerundeten Kanten anfallen.

Im letztgenannten Fall können die erzeugten Dinitramid-Partikel wiederum in der weiter oben geschilderten Weise gewaschen werden, wobei sich der Waschschritt entweder an den auf die Sublimation eines Teils des wenigstens einen Lösungsmittels anschließenden Verdampfungsschritt eines weiteren Lösungsmittelanteils anschließen kann, oder der Waschschritt schließt sich unmittelbar an den Sublimationsschritt (c) des erfindungsgemäßen Verfahrens an, wobei es zwecks eines sehr schonenden Erhalts von weitgehend sphärischen und hochreinen Dinitramid-Partikeln zweckmäßig sein kann, das wenigstens eine Lösungsmittel nur nahezu vollständig zu sublimieren, so dass Lösungsmittelreste auf den Dinitramid-Partikeln zurückbleiben. Die an den noch feuchten Partikeln anhaftenden Lösungsmittelreste können sodann anlässlich des - wie oben erwähnt, vorzugsweise zweistufigen - Waschschrittes praktisch vollständig entfernt werden.

Gemäß einer vorteilhaften Weiterbildung des erfindungsgemäßen Verfahrens kann vorgesehen sein, dass das Dinitramid gemäß Schritt (a) in einer Lösungsmittelmischung aus wenigstens zwei Lösungsmitteln mit unterschiedlichen Gefrierpunkten gelöst wird, insbesondere in Form von Wasser und Ammoniak (NH₃). Aufgrund der verschiedenen Gefrier- bzw. Siedetemperaturen der verwendeten Lösungsmittel und der Kristallisationstemperatur des gelösten Dinitramids entsteht beim Abkühlen der Lösung gemäß Schritt (b) eine beeinflussbare Abfolge von Vorgängen, wobei zunächst vornehmlich ein Einfrieren des Lösungsmittels mit höherem Gefrierpunkt (z.B. Wasser) erfolgt, wobei bereits ein Aufkonzentrieren des Dinitramids, einhergehend mit dessen Kristallbildung und Kristallwachstum, stattfindet, wonach vornehmlich das Lösungsmittel mit niedrigerem Gefrierpunkt (z.B. Ammoniak) erstarrt, wobei ein weiteres Kristallwachstum der Partikel des Dinitramids stattfinden kann. So kann beispielsweise durch die Wahl eines bei vergleichsweise hoher Temperatur schmelzenden bzw. siedenden Lösungsmittels, wie beispielsweise Wasser, anlässlich des Abkühlens gemäß Schritt (b) zunächst eine Matrix von Wassereiskristallen erzeugt werden, welche das gesamte System durchzieht. Aufgrund des anderen Lösungsmittels mit demgegenüber niedrigerem Gefrier- bzw. Siedepunkt, wie beispielsweise Ammoniak (NH₃), kann der Erstarrungspunkt der Lösung insgesamt stark erniedrigt und eingestellt werden. Die Entstehung der Kristalle aus Dinitramid geschieht hierbei insbesondere durch die folgenden Vorgänge:
- Verdrängen des gelösten Dinitramids während des Gefriervorgangs des höher schmelzenden bzw. siedenden Lösungsmittels gemäß Schritt (b);
- Entmischen der verschiedenen Lösungsmittel, z.B. durch selektives Erstarren, und hieraus resultierendes Aufkonzentrieren des gelösten Dinitramids in dem niedriger schmelzenden bzw. siedenden Lösungsmittel der Lösungsmittelmischung gemäß Schritt (b);
- Keimbildung und Kristallwachstum im weiteren Prozessverlauf, beispielsweise durch weitere Temperaturabsenkung gemäß Schritt (b); und
- Entfernen zumindest eines Anteils der Lösungsmittel durch Sublimation gemäß Schritt (c), insbesondere getrieben durch Anlegen eines Vakuums.

Auch in diesem Zusammenhang kann gemäß einer vorteilhaften Verfahrensvariante vorgesehen sein, dass alle Lösungsmittel der Lösungsmittelmischung gemäß Schritt (c) im Wesentlichen vollständig sublimiert werden. In diesem Fall werden beide bzw. alle Lösungsmittel der Lösungsmittelmischung folglich vollständig von den auskristallisierten Partikeln des Dinitramids abgetrennt, ohne auch das am niedrigsten schmelzende bzw. siedende Lösungsmittel von der festen in die flüssige Phase zu überführen, d.h. der Phasenübergang der Lösungsmittelmischung erfolgt praktisch vollständig von fest zu gasförmig. Die solchermaßen erzeugten Dinitramid-Partikel weisen sehr hohe Dichten sowie eine sehr hohe thermische Stabilität auf, welche weitestgehend jenen des Rohmaterials entspricht, wobei insbesondere keine Zersetzung des Dinitramids stattfindet.

Hierbei kann es sich als vorteilhaft erweisen, wenn der Unterdruck und/oder die Temperatur derart eingestellt wird, dass sich das Lösungsmittel der Lösungsmittelmischung (z.B. Ammoniak), welches den niedrigsten Gefrier- bzw. Siedepunkt aufweist, unmittelbar unterhalb seines Phasenübergangs von der festen in die flüssige Phase befindet. Die eingestellte Temperatur bei dem jeweils eingestellten Unterdruck kann dabei beispielsweise zumindest temporär wenige °C, z.B. etwa 0,1° bis etwa 5°C, unterhalb des Phasenübergangs von der festen in die flüssige Phase des am niedrigsten schmelzenden Lösungsmittels der Lösungsmittelmischung, welches noch nicht im Wesentlichen vollständig sublimiert worden ist, bei dem herrschenden Druck gehalten werden, wobei es auch im Falle des Einsatzes einer Lösungsmittelmischung insbesondere von Vorteil sein kann, wenn die Sublimation stufenweise bei verschiedenen Temperaturen und/oder Unterdrücken erfolgt. So bietet es sich insbesondere an, die in der festen Phase vorliegende Lösungsmittelmischung anfänglich bei einer niedrigen Temperatur (knapp) unterhalb des Phasenübergangs von der festen in die flüssige Phase des niedrig schmelzenden Lösungsmittels bei dem jeweils eingestellten Druck zu halten, bis das niedrig schmelzende Lösungsmittel im Wesentlichen vollständig sublimiert worden ist, wonach die Temperatur bis auf (knapp) unterhalb des Phasenübergangs von der festen in die flüssige Phase des höher schmelzenden Lösungsmittels bei dem jeweils eingestellten Druck erhöht wird, bis auch das höher schmelzende Lösungsmittel im Wesentlichen vollständig sublimiert worden ist. Bei einer solchen stufenweisen Verfahrensführung hat sich gezeigt, dass sehr gleichmäßige, sphärische Partikel mit einer abgerundeten, aber gleichwohl sehr kompakten Morphologie hoher Dichte, hoher Reinheit und hoher thermischer und chemischer Stabilität erzeugt werden können, welche jenen des eingesetzten Rohmaterials entspricht.

Alternativ kann auch im Falle des Einsatzes einer Lösungsmittelmischung vorgesehen sein, dass nur wenigstens ein Lösungsmittel der Lösungsmittelmischung mit niedrigem Gefrierpunkt gemäß Schritt (c) im Wesentlichen vollständig sublimiert wird, wonach
- zumindest ein Anteil wenigstens eines weiteren Lösungsmittels der Lösungsmittelmischung mit demgegenüber höherem Gefrier- bzw. Siedepunkt, insbesondere durch Erhöhen des Unterdruckes auf ein Druckniveau und/oder durch Erhöhen der Temperatur auf ein Temperaturniveau, bei welchem das Lösungsmittel mit höherem Gefrier- bzw. Siedepunkt in der flüssigen Phase vorliegt, verdampft wird, wie beispielsweise mittels Vakuum- oder Sprühtrocknung; und/oder
- die erhaltenen Partikel des Dinitramids nach dem Sublimieren zumindest des wenigstens einen Lösungsmittels der Lösungsmittelmischung mit niedrigerem Gefrier- bzw. Siedepunkt und gegebenenfalls nach Verdampfen des Anteils des wenigstens einen weiteren Lösungsmittels der Lösungsmittelmischung mit demgegenüber höheren Gefrier- bzw. Siedepunkt in wenigstens einem organischen Lösungsmittel gewaschen werden, wobei sie insbesondere zunächst in wenigstens einem ersten polaren organischen Lösungsmittel und sodann in wenigstens einem zweiten unpolaren organischen Lösungsmittel gewaschen werden.

Im erstgenannten Fall kann dies beispielsweise weitgehend entsprechend der vorgenannten stufenweisen Verfahrensführung mit vollständiger Sublimation beider bzw. aller Lösungsmittel der Lösungsmittelmischung geschehen, mit dem Unterschied, dass nach im Wesentlichen vollständiger Sublimation des niedrig schmelzenden bzw. siedenden Lösungsmittels, gegebenenfalls gefolgt von der Sublimation zumindest eines Anteils des höher schmelzenden bzw. siedenden Lösungsmittels bei einer Temperatur (knapp) unterhalb des Phasenübergangs von der festen in die flüssige Phase des höher schmelzenden bzw. siedenden Lösungsmittels bei dem jeweils eingestellten Druck, die Temperatur bis auf oder knapp oberhalb der Temperatur, bei welcher das höher schmelzende bzw. siedende Lösungsmittel bei dem jeweils eingestellten Druck in der flüssigen Phase vorliegt, erhöht wird, so dass ein Anteil des höher schmelzenden bzw. siedenden Lösungsmittels verdampft. Wie oben in Bezug auf den Einsatz nur eines Lösungsmittels erwähnt, ist es auch in diesem Fall denkbar, dass die Temperatur und/oder der Unterdruck, z.B. in periodischen Zyklen, zwischen den beiden vorgenannten Zuständen variiert wird, nachdem das niedrig schmelzende Lösungsmittel sublimiert worden ist, so dass abwechselnd Anteile des höher schmelzenden bzw. siedenden Lösungsmittels vornehmlich sublimiert bzw. vornehmlich verdampft werden.

Im letztgenannten Fall können die erzeugten Dinitramid-Partikel wiederum in der weiter oben geschilderten Weise gewaschen werden, wobei sich der Waschschritt entweder an den auf die Sublimation des wenigstens einen Lösungsmittels der Lösungsmittelmischung mit niedrigem Gefrierpunkt anschließenden, zumindest teilweisen Verdampfungsschritt des wenigstens einen Lösungsmittels der Lösungsmittelmischung mit demgegenüber höherem Gefrierpunkt anschließen kann, oder der Waschschritt schließt sich unmittelbar an den Sublimationsschritt des wenigstens einen Lösungsmittels der Lösungsmittelmischung mit niedrigem Gefrierpunkt an. Im Hinblick auf einen sehr schonenden Erhalt von weitgehend sphärischen und hochreinen Dinitramid-Partikeln kann es auch insoweit zweckmäßig sein kann, zumindest das wenigstens eine Lösungsmittel der Lösungsmittelmischung mit höherem Gefrier- bzw. Siedepunkt nur nahezu vollständig zu sublimieren bzw. zumindest teilweise zu verdampfen, so dass Lösungsmittelreste auf den Dinitramid-Partikeln zurückbleiben. Die an den noch feuchten Partikeln anhaftenden Lösungsmittelreste können sodann wiederum anlässlich des - wie oben erwähnt, vorzugsweise zweistufigen - Waschschrittes praktisch vollständig entfernt werden.

Das erfindungsgemäße Verfahren macht es selbstverständlich möglich, dass dem wenigstens einen Lösungsmittel gemäß Schritt (a) bedarfsweise beliebige, aus dem Stand der Technik als solche bekannte Additive, insbesondere aus der Gruppe der Stabilisatoren, Tenside, Emulgatoren, Antibackmittel und dergleichen, zugesetzt werden, welche in die gebildeten Kristalle des Dinitramids eingebaut werden und/oder ihrerseits als Keimbildner für die Kristallbildung des Dinitramids dienen können. Darüber hinaus lassen sich die fertigen Dinitramid-Partikel beispielsweise auch, z.B. mit aus dem Stand der Technik als solchen bekannten Polymeren, beschichten, wie es für den Einsatzzweck in Festtreibstoffen erforderlich sein kann.

Das erfindungsgemäße Verfahren eignet sich auf diese Weise zur Herstellung von hoch reinen, kompakten, weitgehend sphärischen oder zumindest abgerundeten und sowohl thermisch als auch chemisch stabilen Partikeln aus Oxidatorsalzen aus der Gruppe der Dinitramide, wobei es sich insbesondere für Ammoniumdinitramid (ADN), Kaliumdinitramid (KDN) und Guanylureadinitramid (GUDN, auch als FOX-12 bezeichnet) als vorteilhaft erwiesen hat, wobei insbesondere ADN, aber auch KDN und GUDN aufgrund ihrer Hygroskopizität und ihrer Neigung zur Bildung von sehr unregelmäßigen, nadelartigen Kristallen geringer Dichte mittels bekannter Verfahren nur schwer darstellbar sind.

Wie bereits erwähnt, bietet sich als Lösungsmittel für das jeweilige Dinitramid insbesondere eine sowohl Wasser als auch Ammoniak enthaltende oder auch mehr oder minder hieraus bestehende Lösungsmittelmischung an. Da Ammoniak (NH₃) eine stabilisierende Wirkung auf Dinitramid-Anionen besitzt, wird bei der Dissoziation des Dinitramids in Wasser keine stabilitätsmindernde Wirkung von Wasser auf das Dinitramid beobachtet, wie sie im Falle einer wässrigen Lösung ansonsten eintreten kann. Durch die Bereitstellung einer Lösungsmittelmischung von Ammoniak in Wasser wird ferner der pH-Wert der in der Lösungsmittelmischung, in welcher das Dinitramid gemäß Schritt (a) gelöst wird, in den basischen Bereich verschoben, so dass eine Zersetzung des Dinitramids, welche vornehmlich in saurem Milieu einsetzt, verhindert wird.

Weitere Merkmale und Vorteile der Erfindung ergeben sich aus den nachfolgenden Ausführungsbeispielen unter Bezugnahme auf die Zeichnungen. Dabei zeigen:
- Fig. 1A: ein Schaubild des mittels dynamischer Differenzkalorimetrie (DSC) ermittelten Wärmestroms über die Temperatur von gemäß einem ersten Ausführungsbeispiel des erfindungsgemäßen Verfahrens hergestellten Partikel aus Ammoniumdinitramid (ADN), wobei 50 Mass.-% ADN in 50 Mass.-% einer Lösungsmittelmischung aus 25 Mass.-% Ammoniak und 75 Mass.-% Wasser gelöst und die Lösungsmittelmischung vollständig sublimiert worden ist;
- Fig. 1B: eine mikroskopische Aufnahme der gemäß dem ersten Ausführungsbeispiel erhaltenen Partikel aus Ammoniumdinitramid (ADN);
- Fig. 2A: ein Schaubild des mittels dynamischer Differenzkalorimetrie (DSC) ermittelten Wärmestroms über die Temperatur von gemäß einem zweiten Ausführungsbeispiel des erfindungsgemäßen Verfahrens hergestellten Partikel aus Ammoniumdinitramid (ADN), wobei 50 Mass.-% ADN in 50 Mass.-% einer Lösungsmittelmischung aus 10 Mass.-% Ammoniak und 90 Mass.-% Wasser gelöst und die Lösungsmittelmischung vollständig sublimiert worden ist;
- Fig. 2B: eine mikroskopische Aufnahme der gemäß dem zweiten Ausführungsbeispiel erhaltenen Partikel aus Ammoniumdinitramid (ADN);
- Fig. 3A: ein Schaubild des mittels dynamischer Differenzkalorimetrie (DSC) ermittelten Wärmestroms über die Temperatur von gemäß einem dritten Ausführungsbeispiel des erfindungsgemäßen Verfahrens hergestellten Partikel aus Ammoniumdinitramid (ADN), wobei 50 Mass.-% ADN in 50 Mass.-% einer Lösungsmittelmischung aus 5 Mass.-% Ammoniak und 95 Mass.-% Wasser gelöst und die Lösungsmittelmischung vollständig sublimiert worden ist;
- Fig. 3B: eine mikroskopische Aufnahme der gemäß dem dritten Ausführungsbeispiel erhaltenen Partikel aus Ammoniumdinitramid (ADN);
- Fig. 4A: ein Schaubild des mittels dynamischer Differenzkalorimetrie (DSC) ermittelten Wärmestroms über die Temperatur von gemäß einem vierten Ausführungsbeispiel des erfindungsgemäßen Verfahrens hergestellten Partikel aus Ammoniumdinitramid (ADN), wobei 50 Mass.-% ADN in 50 Mass.-% einer Lösungsmittelmischung aus 2,5 Mass.-% Ammoniak und 97,5 Mass.-% Wasser gelöst und die Lösungsmittelmischung stufenweise zunächst sublimiert und sodann verdampft worden ist;
- Fig. 4B: eine mikroskopische Aufnahme der gemäß dem vierten Ausführungsbeispiel erhaltenen Partikel aus Ammoniumdinitramid (ADN);

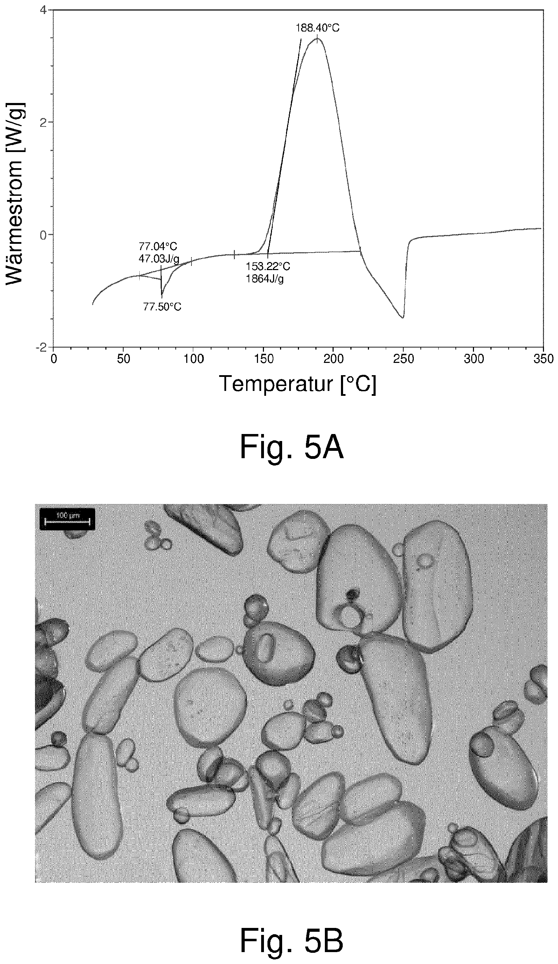

- Fig. 5A: ein Schaubild des mittels dynamischer Differenzkalorimetrie (DSC) ermittelten Wärmestroms über die Temperatur von gemäß einem fünften Ausführungsbeispiel des erfindungsgemäßen Verfahrens hergestellten Partikel aus Ammoniumdinitramid (ADN), wobei 50 Mass.-% ADN in 50 Mass.-% einer Lösungsmittelmischung aus 2,5 Mass.-% Ammoniak und 97,5 Mass.-% Wasser gelöst und die Lösungsmittelmischung stufenweise zunächst sublimiert und sodann verdampft worden ist, wobei der Unterschied gegenüber dem vierten Ausführungsbeispiel darin besteht, dass die Lösung gemäß Schritt (b) zu gefrorenen Platten mit einer Schichtdicke von 5 cm anstelle von 2 cm gemäß dem Ausführungsbeispiel 4 erstarrt worden ist;
- Fig. 5B: eine mikroskopische Aufnahme der gemäß dem fünften Ausführungsbeispiel erhaltenen Partikel aus Ammoniumdinitramid (ADN);
- Fig. 6A: ein Schaubild des mittels dynamischer Differenzkalorimetrie (DSC) ermittelten Wärmestroms über die Temperatur von gemäß einem sechsten Ausführungsbeispiel des erfindungsgemäßen Verfahrens hergestellten Partikel aus Ammoniumdinitramid (ADN), wobei 25 Mass.-% ADN in 75 Mass.-% einer Lösungsmittelmischung aus 2,5 Mass.-% Ammoniak und 97,5 Mass.-% Wasser gelöst und die Lösungsmittelmischung vollständig sublimiert worden ist;
- Fig. 6B: eine mikroskopische Aufnahme der gemäß dem sechsten Ausführungsbeispiel erhaltenen Partikel aus Ammoniumdinitramid (ADN);
- Fig. 7A: ein Schaubild des mittels dynamischer Differenzkalorimetrie (DSC) ermittelten Wärmestroms über die Temperatur von gemäß einem siebten Ausführungsbeispiel des erfindungsgemäßen Verfahrens hergestellten Partikel aus Ammoniumdinitramid (ADN), wobei 12,5 Mass.-% ADN in 87,5 Mass.-% einer Lösungsmittelmischung aus 2,5 Mass.-% Ammoniak und 97,5 Mass.-% Wasser gelöst und die Lösungsmittelmischung vollständig sublimiert worden ist;
- Fig. 7B: eine mikroskopische Aufnahme der gemäß dem siebten Ausführungsbeispiel erhaltenen Partikel aus Ammoniumdinitramid (ADN);
- Fig. 8A: ein Schaubild des mittels dynamischer Differenzkalorimetrie (DSC) ermittelten Wärmestroms über die Temperatur von gemäß einem achten Ausführungsbeispiel des erfindungsgemäßen Verfahrens hergestellten Partikel aus Ammoniumdinitramid (ADN), wobei 50 Mass.-% ADN in 50 Mass.-% einer Lösungsmittelmischung aus 2,5 Mass.-% Ammoniak und 97,5 Mass.-% Wasser gelöst und die Lösungsmittelmischung stufenweise sublimiert worden ist;
- Fig. 8B: eine mikroskopische Aufnahme der gemäß dem achten Ausführungsbeispiel erhaltenen Partikel aus Ammoniumdinitramid (ADN);
- Fig. 9A: eine mikroskopische Aufnahme von gemäß einem neunten Ausführungsbeispiel des erfindungsgemäßen Verfahrens hergestellten Partikeln aus Ammoniumdinitramid (ADN), wobei 50 Mass.-% ADN in 50 Mass.-% einer Lösungsmittelmischung aus 5 Mass.-% Ammoniak und 95 Mass.-% Wasser gelöst und die Lösungsmittelmischung stufenweise bis auf eine geringe Restfeuchte sublimiert worden ist, wonach die feuchten ADN-Partikel gewaschen worden sind;
- Fig. 9B: eine mikroskopische Aufnahme der mittels des neunte Ausführungsbeispiels erzeugten ADN-Partikel nach ihrer Beschichtung mit einem Polymer;
- Fig. 10A: ein Schaubild des mittels dynamischer Differenzkalorimetrie (DSC) ermittelten Wärmestroms über die Temperatur des gemäß den Ausführungsbeispielen 1 bis 9 eingesetzten ADN-Rohmaterials *(EURENCO BOFORS AB,* Karlskoga, Schweden, LOT-Nr. 20179014) zu Vergleichszwecken;
- Fig. 10B: zwei mikroskopische Aufnahmen des gemäß den Ausführungsbeispielen 1 bis 9 eingesetzten, stark agglomerierten ADN-Rohmaterials zu Vergleichszwecken;
- Fig. 11A: ein Schaubild des mittels dynamischer Differenzkalorimetrie (DSC) ermittelten Wärmestroms über die Temperatur von gemäß einem zehnten Ausführungsbeispiel des erfindungsgemäßen Verfahrens hergestellten Partikel aus Kaliumdinitramid (KDN), wobei 20 Mass.-% KDN in 80 Mass.-% einer Lösungsmittelmischung aus 5 Mass.-% Ammoniak und 95 Mass.-% Wasser gelöst und die Lösungsmittelmischung stufenweise sublimiert worden ist;
- Fig. 11B: eine mikroskopische Aufnahme der gemäß dem zehnten Ausführungsbeispiel erhaltenen Partikel aus Kaliumdinitramid (KDN);
- Fig. 12A: ein Schaubild des mittels dynamischer Differenzkalorimetrie (DSC) ermittelten Wärmestroms über die Temperatur des gemäß dem Ausführungsbeispiel 10 eingesetzten KDN-Rohmaterials zu Vergleichszwecken;
- Fig. 12B: eine mikroskopische Aufnahmen des gemäß dem Ausführungsbeispiel 10 eingesetzten, agglomerierten und nadelartigen KDN-Rohmaterials zu Vergleichszwecken;
- Fig. 13A: ein Schaubild des mittels dynamischer Differenzkalorimetrie (DSC) ermittelten Wärmestroms über die Temperatur von gemäß einem elften Ausführungsbeispiel des erfindungsgemäßen Verfahrens hergestellten Partikel aus Guanylureadinitramid (GUDN), wobei 4 Mass.-% GUDN in 96 Mass.-% einer Lösungsmittelmischung aus 25 Mass.-% Ammoniak und 75 Mass.-% Wasser gelöst und die Lösungsmittelmischung stufenweise sublimiert worden ist;
- Fig. 13B: eine mikroskopische Aufnahme der gemäß dem elften Ausführungsbeispiel erhaltenen Partikel aus Guanylureadinitramid (GUDN);
- Fig. 14A: ein Schaubild des mittels dynamischer Differenzkalorimetrie (DSC) ermittelten Wärmestroms über die Temperatur des gemäß dem Ausführungsbeispiel 11 eingesetzten GUDN-Rohmaterials zu Vergleichszwecken; und
- Fig. 14B: eine mikroskopische Aufnahmen des gemäß dem Ausführungsbeispiel 11 eingesetzten, stark agglomerierten und nadelartigen GUDN-Rohmaterials zu Vergleichszwecken.

### Ausführungsbeispiele:

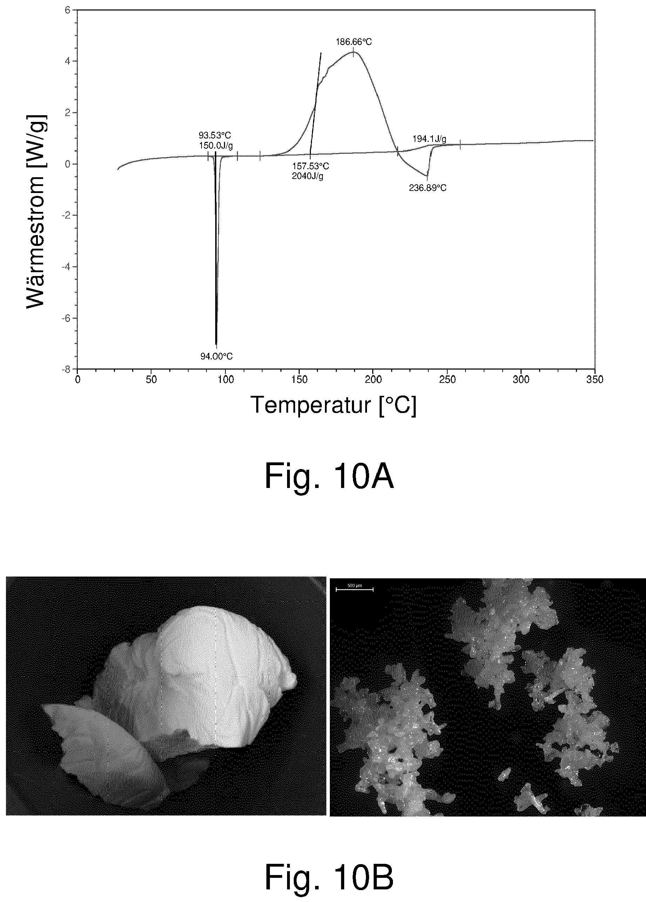

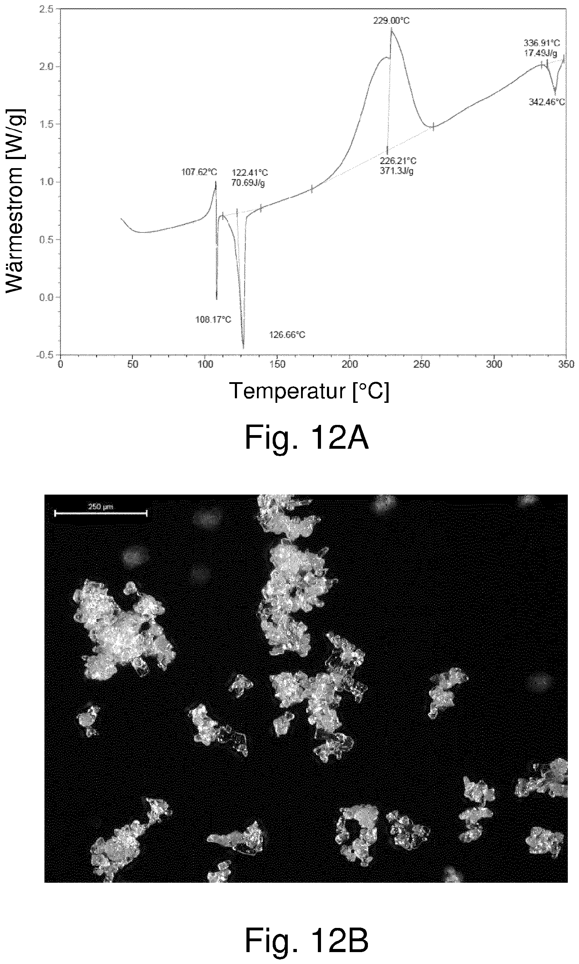

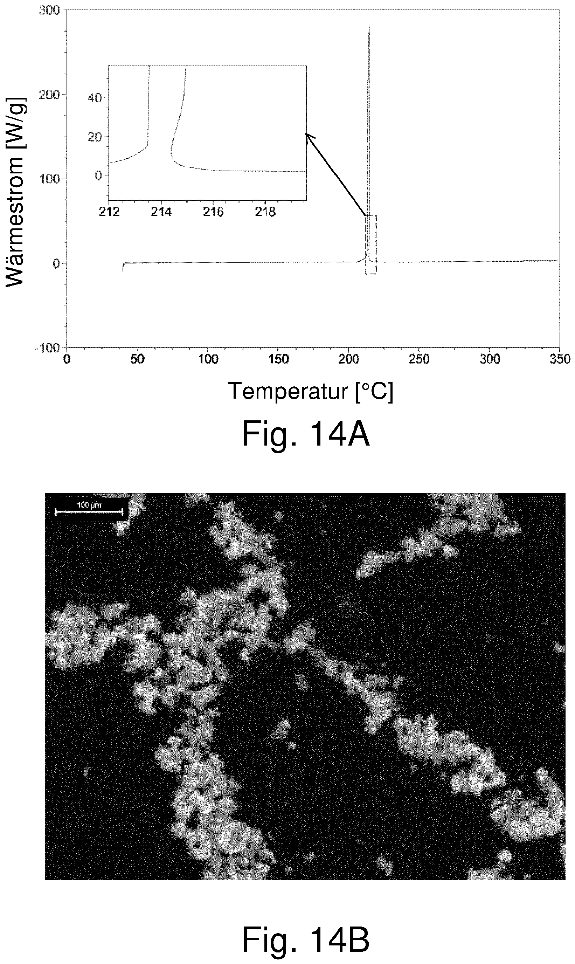

In den Ausführungsbeispielen wurden Partikel aus den Oxidatorsalzen Ammoniumdinitramid (ADN; Beispiele 1 bis 9), Kaliumdinitramid KDN; Beispiel 10) und Guanylureadinitramid (GUDN bzw. FOX-12; Beispiel 11) hergestellt, welche mittels herkömmlicher Verfahren nach dem Stand der Technik aufgrund ihrer Hygroskopizität, ihrer starken Agglomerationsneigung sowie ihrer Neigung zur Bildung von sehr unregelmäßigen, nadelförmigen Kristallen geringer Dichte, ihrer hohen Reibund Schlagempfindlichkeit sowie der Neigung des Dinitramid-Anions zur Dissoziation zu Nitrat-Ionen, insbesondere im wässrigen Milieu, nur sehr schwer darstellbar sind. Als Rohmaterial wurde für die Ausführungsbeispiele 1 bis 9 praktisch vollständig agglomeriertes, reines Ammoniumdinitramid (ADN) des Herstellers *EURENCO BOFORS AB* (Karlskoga, Schweden), LOT-Nr. 20179014 eingesetzt (vgl. die Fig. 10B), dessen DSC-Schaubild zu Vergleichszwecken in der Fig. 10A wiedergegeben ist. Als jeweiliges Rohmaterial für die Ausführungsbeispiele 10 (KDN) und 11 (GUDN) wurde ebenfalls stark agglomeriertes und nadelförmig kristallines Rohmaterial in Form von reinem Kaliumdinitramid (KDN; vgl. Fig. 12B) bzw. Guanylureadinitramid (GUDN; vgl. Fig. 14B) eingesetzt, deren DSC-Schaubilder zu Vergleichszwecken in den Fig. 12A (für KDN) und 14A (für GUDN) wiedergegeben sind.

Alle DSC-Diagramme wurden mit einer Heizrate von 5°C/min aufgenommen. Man erkennt in der Fig. 10A insbesondere den für reines ADN charakteristischen, diskreten, endothermen Schmelzpeak bei etwa 94°C sowie die beginnende thermische Zersetzung ab etwa 135°C. Im Bereich von 60°C ist kein Peak erkennbar, welcher auf eine teilweise Zersetzung des ADN-Rohmaterials hindeuten würde, da festes Ammoniumdinitramid (ADN) und sein festes Zersetzungsprodukt Ammoniumnitrat (AN) im Bereich von 60°C eine eutektische Mischung bilden. Als Hinweis auf einen (teilweisen) Zerfall von ADN zu AN vermag neben dem genannten, ebenfalls endothermen Peak bei etwa 60°C auch eine deutliche Erniedrigung und/oder Verbreiterung des endothermen Schmelzpeaks zu dienen. Aus der Fig. 12A ist insbesondere einerseits der endotherme Schmelzpeak von reinem KDN, andererseits der breite, aus zwei überlappenden Peaks gebildete Zersetzungspeak von KDN bei etwa 229°C ersichtlich. Darüber hinaus ist bei etwa 337°C der endotherme Zersetzungspeak der Zersetzungsprodukte von KDN, insbesondere in Form von Kaliumnitrat (KN), erkennbar. Der Fig. 14A ist der für reines Guanylureadinitramid (GUDN) charakteristische, diskrete, exotherme Schmelzpeak bei etwa 213°C zu entnehmen.

In den Ausführungsbeispielen 1 bis 9 wurden gemäß Schritt (a) des erfindungsgemäßen Verfahrens jeweils zwischen 2 kg und 3,5 kg des ADN-Rohmaterials mit unterschiedlichen Anteilen in einer Lösungsmittelmischung aus Wasser und Ammoniak unterschiedlicher Zusammensetzungen gelöst. Die auf diese Weise erhaltenen Lösungen wurden sodann gemäß Schritt (b) bei Umgebungsdruck getrennt voneinander auf den Einschüben einer Gefriertrocknungsanlage auf eine Temperatur von etwa -35°C abgekühlt, um die Lösungsmittelmischung vollständig zu Platten zu erstarren und Partikel aus ADN auszukristallisieren. Hierbei wurde beobachtet, dass die Lösungen unter Bildung eines heterogenen Dreiphasengemisches (ADN, Wasser, Ammoniak) in die feste Phase überführt werden.

Anschließend wurde die in der festen Phase vorliegende Lösungsmittelmischung gemäß Schritt (c) teils vollständig (Beispiele 1 bis 4, 7 und 8), teils teilweise (Beispiele 5, 6 und 9) sublimiert, um die Partikel aus ADN zu erhalten, indem ein Vakuum von etwa 2 mbar angelegt und die Temperatur über einen Zeitraum von 48°h langsam erhöht wurde. Während in den Beispielen 1 bis 4, 7 und 8 der Temperaturgradient über die Zeit derart gewählt wurde, dass beide Lösungsmittelkomponenten (Wasser, Ammoniak) vollständig sublimieren, wurde er bei den Ausführungsbeispielen 5 und 6 derart gewählt, dass nur der Ammoniak im Wesentlichen vollständig sublimierte, während ein Restanteil an Wasser mittels Vakuum- oder Sprühtrocknung verdampft wurde. Im Beispiel 8 wurde der Temperaturgradient über die Zeit derart eingestellt, dass zunächst der Ammoniak im Wesentlichen vollständig sublimiert worden ist, wonach die Temperatur bis knapp unterhalb der Erstarrungstemperatur des Wassers bei dem nach wie vor herrschenden Unterdruck gehalten wurde, um auch das Wasser vollständig zu sublimieren.

Im Falle des Ausführungsbeispiels 9 wurde die Lösungsmittelmischung aus Wasser und Ammoniak gleichfalls, z.B. beginnend bei ca. -35°C bis auf eine Endtemperatur von ca. -15°C, langsam erhöht, wobei das Lösungsmittel bis auf eine geringe Restfeuchte nahezu vollständig sublimiert worden ist, woraufhin die noch feuchten ADN-Partikel bei Raumtemperatur gewaschen worden sind, um die an den ADN-Partikeln anhaftende Lösungsmittelreste, vornehmlich Wasser, zu entfernen. Dabei wurden die ADN-Partikel in einem ersten Waschschritt zunächst mit iso-Propanol als erstem polaren organischen Lösungsmittel und sodann in einem zweiten Waschschritt mit n-Heptan als zweitem unpolaren organischen Lösungsmittel gewaschen. Etwaige Reste von an den gewaschenen ADN-Partikel gegebenenfalls noch anhaftendem n-Heptan wurden schließlich mittels Vakuumtrocknung bei etwa 40°C vollständig entfernt.

In der nachfolgenden Tabelle sind die wesentlichen Verfahrensparameter der Ausführungsbeispiele 1 bis 9 stichpunktartig wiedergegeben:

| Beispiel | Anteil NH₃ in H₂O [Mass.-%] | Anteil ADN in NH₃/H₂O [Mass.-%] | Verfahrensführung |
|---|---|---|---|
| 1 | 25 | 50/50 | vollständige Sublimation |
| 2 | 10 | 50/50 | vollständige Sublimation |
| 3 | 5 | 50/50 | vollständige Sublimation |
| 4 | 2,5 | 50/50 | Stufenweise: |
| | | | 1. Sublimation NH₃ |
| | | | 2. Sublimation H₂O |
| | | | 3. Verdampfung H₂O |
| | | | Plattendicke: 2 cm |
| 5 | 2,5 | 50/50 | Stufenweise: |
| | | | 1. Sublimation NH₃ |
| | | | 2. Sublimation H₂O |
| | | | 3. Verdampfung H₂O |
| | | | Plattendicke: 5 cm |
| 6 | 2,5 | 25/75 | vollständige Sublimation |
| 7 | 2,5 | 12,5/87,5 | vollständige Sublimation |
| 8 | 2,5 | 50/50 | Stufenweise: |
| | | | 1. Sublimation NH₃ |
| | | | 2. Sublimation H₂O |
| 9 | 5 | 50/50 | nahezu vollständige Sublimation mit anschließendem Waschen des ADN |

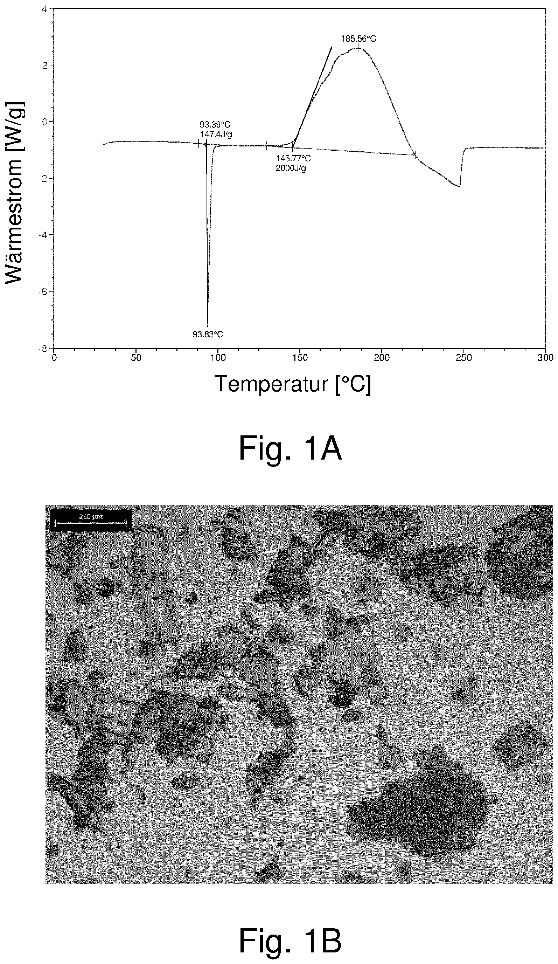

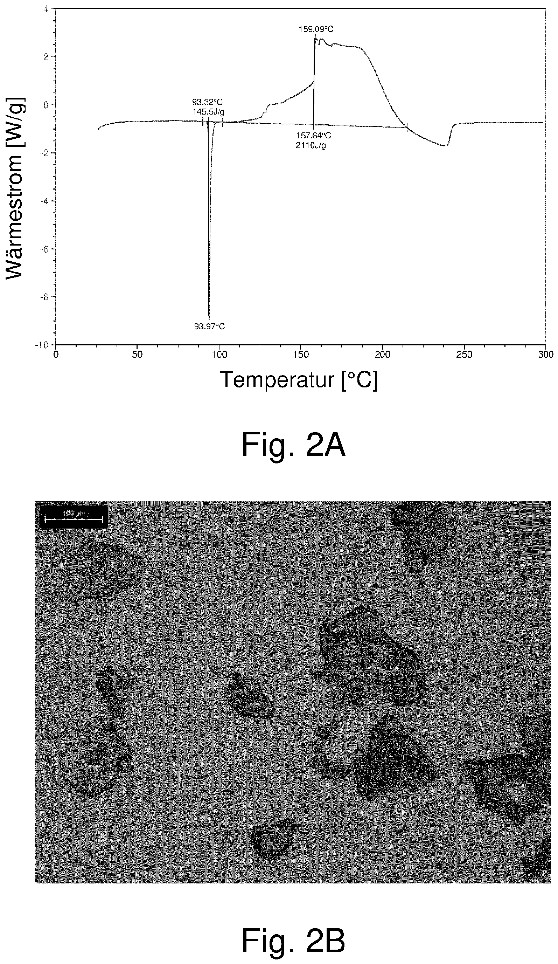

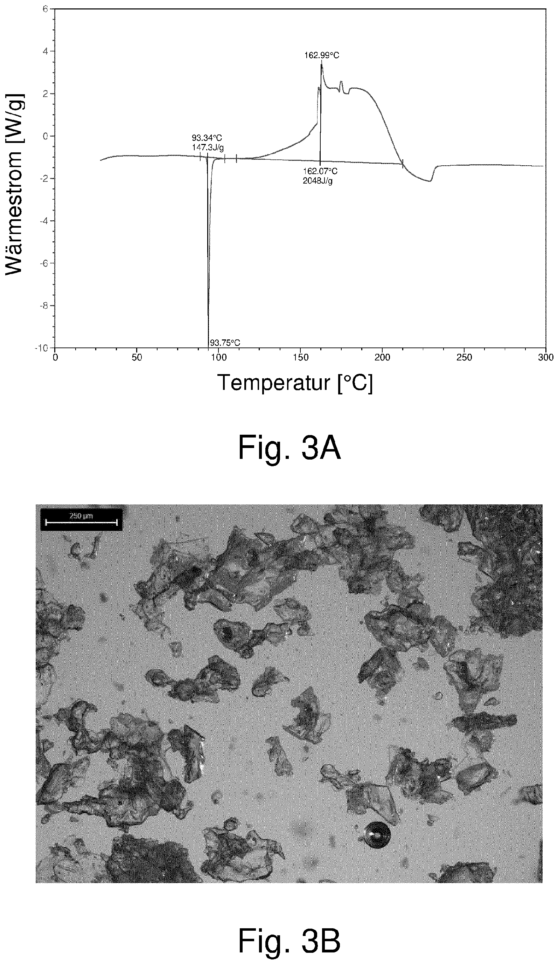

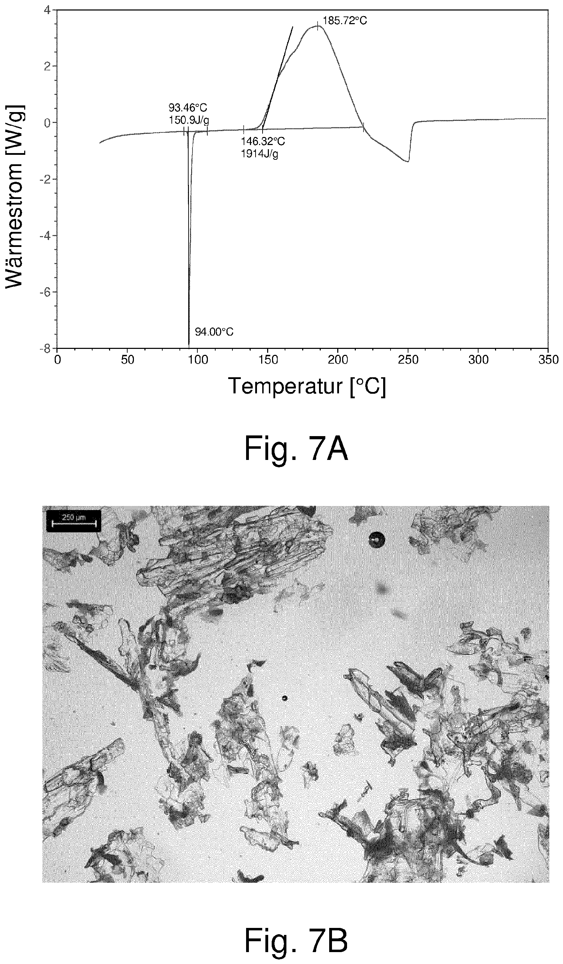

Die auf diese Weise erhaltenen Partikel aus ADN wurden zunächst mittels Mikroskopie *(LEICA Z17 APO)* untersucht (vgl. die Fig. 1B, 2B, 3B, 4B, 5B, 6B, 7B, 8B und 9A), wobei abgerundete, agglomerationsfreie Partikel mit kompakter Morphologie erhalten wurden (vgl. insbesondere die Ausführungsbeispiele 1, 4, 5, 8 und 9).

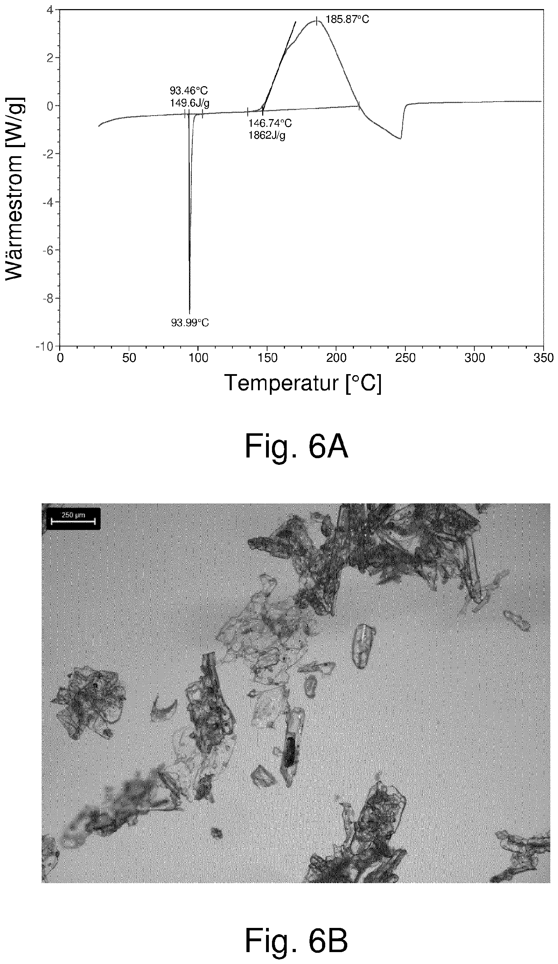

Darüber hinaus wurden die auf diese Weise erhaltenen Partikel aus ADN mittels dynamischer Differenzkalorimetrie (DSC) bei einer Heizrate von 5°C/min untersucht (vgl. die Fig. 1A, 2A, 3A, 4A, 5A, 6A, 7A und 8A). Dabei zeigen insbesondere die gemäß den Ausführungsbeispielen 1 bis 3 und 6 bis 8 erhaltenen ADN-Partikel einen ausgeprägten, diskreten Schmelzpeak bei etwa 94°C sowie eine beginnende thermische Zersetzung ab etwa 135°C, wie es praktisch identisch dem ADN-Rohmaterial (vgl. die Fig. 10A) entspricht. Bei den Ausführungsbeispielen 4 und 5 (vgl. die Fig. 5A und 6A) ist ein Peak im Bereich von etwa 60°C bis 80°C erkennbar, was darauf hindeutet, dass infolge der teilweisen Verdampfung von (flüssigem) Restwasser ein Anteil des Ammoniumdinitramids (ADN) unter Bildung einer eutektischen Mischung zu Ammoniumnitrat (AN) reagiert hat, obgleich sehr sphärische, gleichmäßige Partikel erhalten worden sind (vgl. die Fig. 5B und 6B).

Zur weiteren Charakterisierung der mittels der Ausführungsbeispiele 1 bis 9 erzeugten ADN-Partikel wurden deren Dichte ("d") in [g/cm³] mittels Gaspyknometrie, deren Vakuumstabilität ("VST") anhand der Gasentwicklung in [ml/g] gemäß der Norm *STANAG 4556* sowie deren Nitratgehalt ("NO₃") in [Mass.-%] mittels Ionenchromatographie untersucht und dem ADN-Rohmaterial ("R") gegenüber gestellt, wobei die ermittelten Werte einschließlich der mittels DSC ermittelten Parameter in der nachfolgenden Tabelle wiedergegeben sind:

| Beispiel | R | 1 | 2 | 3 | 4 | 5 | 6 | 7 | 8 | 9 |
|---|---|---|---|---|---|---|---|---|---|---|
| VST *) [ml/g] | 5,22 | 0,29 | 0,33 | 0,33 | --- | --- | 0,82 | 0,51 | 0,11 | 0,58 |
| d [g/cm³] | 1,804 | 1,802 | 1,803 | 1,805 | 1,674 | 1,719 | 1,807 | 1,805 | 1,809 | 1,807 |
| NO₃ [Mass.-%] | 0,060 | 0,007 | 0,007 | 0,007 | 7,92 | 7,48 | < 0,01 | < 0,01 | 0,040 | 0,020 |
| DSC Onset Schmelzpeak [°C] | 93,5 | 93,4 | 93,3 | 93,3 | 72,2 | 77,0 | 93,5 | 93,5 | 93,5 | n.n. **) |
| DSC: Peakverbreiterung bei Schmelze | nein | nein | nein | nein | ja (Eutektikum) | ja -(Eutektikum) | nein | nein | nein | n.n '*) |

| | | | | | | | | | | |
|---|---|---|---|---|---|---|---|---|---|---|
| *) Umrechnung zu Bedingung 100°C, 40 h, 1,0 g; Vakuumstabilitäts-Grenzwert gemäß STANAG 4556 für Explosivstoffe: stabil: bei 100°C, 40 h: Gasentwicklung ≤ 2 ml/g instabil: bei 100°C, 40 h: Gasentwicklung > 2 ml/g **) nicht ermittelt | | | | | | | | | | |

Bei den Ausführungsbeispielen 1 bis 3 und 6 bis 9 wurde eine sehr hohe Vakuumstabilität festgestellt, welche jene des ADN-Rohmaterials deutlich übertrifft. Bei den Beispielen 4 und 5 waren die erhaltenen Partikel instabil, da speziell im Falle von ADN anlässlich der Verdampfung von flüssigem Restwasser ein Teil der Dinitramid-Anionen zu Nitrat-Anionen reagiert hat. Die Dichte der erhaltenen Partikel entspricht bei den Ausführungsbeispielen 1 bis 3 und 6 bis 9 praktisch identisch der hohen Dichte des ADN-Rohmaterial, wohingegen bei den Beispielen 4 und 5 eine geringere Dichte ermittelt wurde, was wiederum dem teilweisen Zerfall von Dinitramid-Anionen zu Nitrat-Anionen bei der eingestellten Verfahrensführung geschuldet ist. Der Nitratgehalt der erhaltenen ADN-Partikel war bei den Ausführungsbeispielen 1 bis 3 praktisch identisch mit jenem des ADN-Rohmaterials, wohingegen bei den Beispielen 6 bis 9 sogar ein demgegenüber merklich geringerer Nitratgehalt infolge der Kristallisation beobachtet wurde. Bei den Beispielen 4 und 5 ergaben sich Nitratanteile zwischen 7 und 8 Mass.-%, was zur Bildung einer eutektischen Mischung aus Ammoniumdinitramid (ADN) und Ammoniumnitrat (AN) geführt hat.

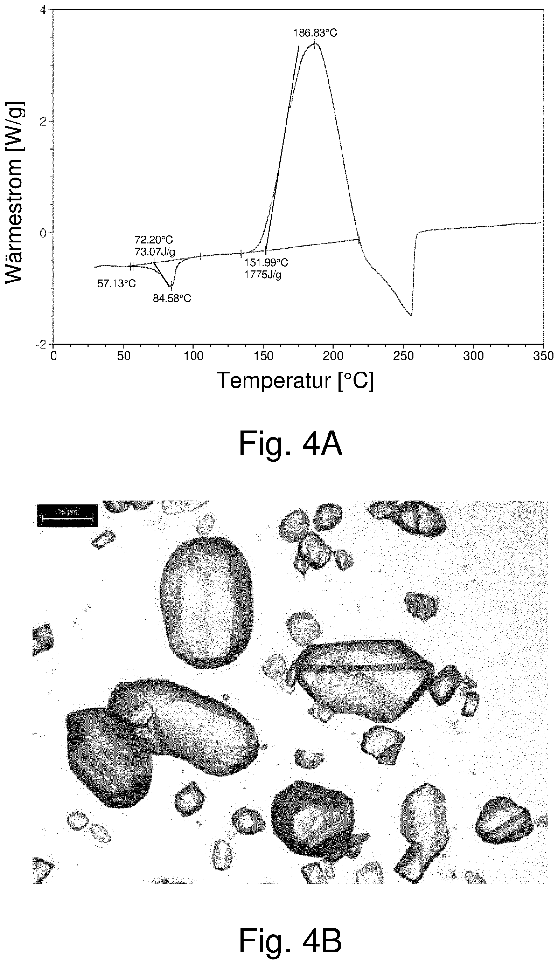

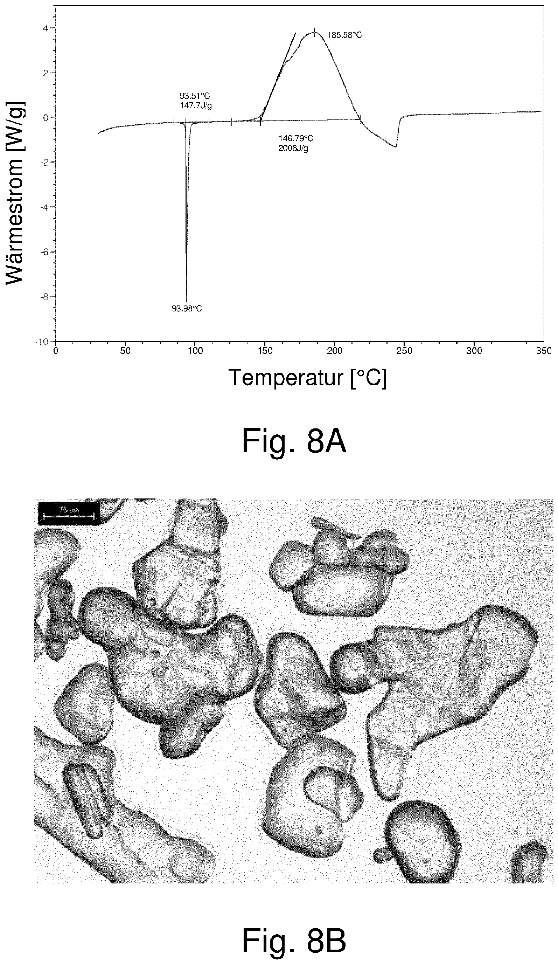

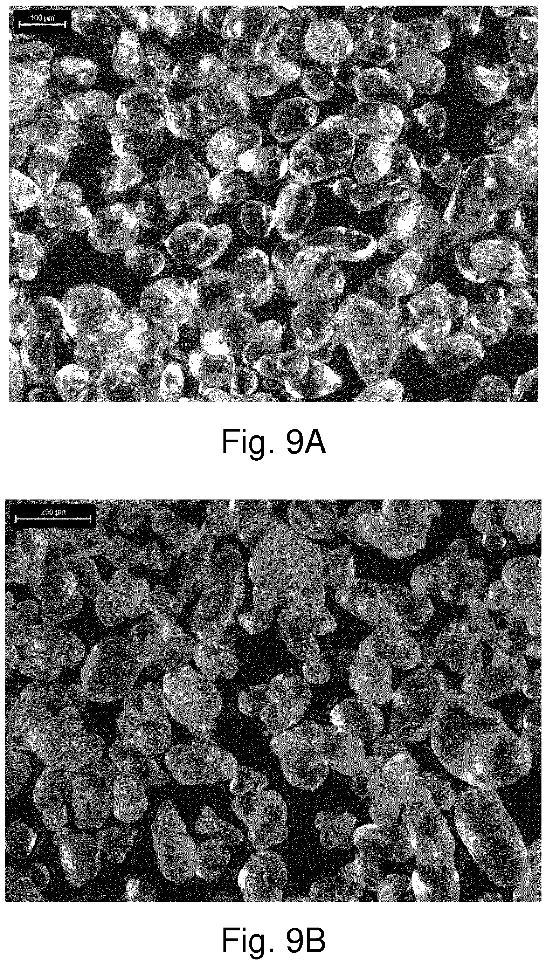

Tendenziell lassen sich somit speziell im Falle von ADN durch eine schnelle, vollständige Sublimation beider Lösungsmittelkomponenten der Lösungsmittelmischung aus Wasser und Ammoniak oder durch eine nahezu vollständige Sublimation der Lösungsmittelmischung mit anschließendem Waschen der ADN-Partikel hohe Dichten, niedrige Nitratwerte und folglich eine geringe Zersetzung sowie eine hohe thermische Stabilität (vgl. die DSC-Diagramme gemäß Fig. 1A, 2A, 3A, 6A und 7A sowie die Werte für die Vakuumstabilität in der obigen Tabelle) erzielen (Ausführungsbeispiele 1, 2, 3, 6, 7 und 9). Durch eine stufenweise Sublimation der leichtflüchtigen Lösungsmittelkomponente Ammoniak mit nachfolgender Verdampfung der höher siedenden Lösungsmittelkomponente Wasser lässt sich ferner die Morphologie der erzeugten Partikel günstig beeinflussen, wobei sehr kompakte Kristalle mit abgerundeten Kanten erzeugt werden (vgl. die Fig. 4B und 5B in Verbindung mit den Ausführungsbeispielen 4 und 5), wenngleich speziell im Falle des Oxidatorsalzes ADN eine teilweise Zersetzung eintritt. Eine nahezu ideale Morphologie der kompakten Kristalle bei sehr hoher Reinheit ergibt sich ferner im Falle der nahezu vollständigen Sublimation des Lösungsmittels mit anschließendem Waschen (vgl. die Fig. 9A). Durch eine langsame und vollständige, aber stufenweise Sublimation (siehe oben) beider Lösungsmittelkomponenten kann speziell im Falle von ADN eine weitere optimierte Prozessführung realisiert werden, welche sowohl eine sehr hohe Dichte, eine sehr hohe chemische und thermische Stabilität, eine sehr geringe Zersetzung sowie eine bevorzugte, sehr kompakte Morphologie der ADN-Partikel mit abgerundeten Kanten ermöglicht (vgl. das Ausführungsbeispiel 8 in Verbindung mit den Fig. 8A und 8B), welches den erhaltenen Partikel beispielsweise eine optimale Einsatzfähigkeit in Raketen-Festtreibstoffen verleiht.

Insbesondere in Bezug auf die verbesserte Vakuumstabilität der erzeugten Partikel des Dinitramids wird dabei vermutet, dass hierfür (auch) ein zusätzlicher Reinigungseffekt des erfindungsgemäßen Kristallisationsverfahrens eine Rolle spielt, da Verunreinigungen des eingesetzten Rohmaterials, wie beispielsweise Lösungsmittelreste aus der Synthese, bei der erfindungsgemäßen Kristallisation des Oxidatorsalzes ausgetrieben werden. Dies erklärte auch den Umstand, dass die bei den Ausführungsbeispielen 1 bis 3 und 6 bis 9 erzielten Vakuumstabilitäten der erzeugten ADN-Partikel zwischen 0,11 ml/g und 0,82 ml/g (jeweils kleiner 2 ml/g und folglich stabil gemäß STANAG 4556; vgl. auch die vorstehende Tabelle) deutlich besser sind als jene des Rohmaterials von 5 ml/g (größer 2 ml/g und folglich instabil gemäß STANAG 4556; vgl. auch die vorstehende Tabelle).

Schließlich wurden die gemäß dem Beispiel 9 erhaltenen ADN-Partikel exemplarisch mittels eines Wirbelschichtprozesses mit einem Polymer, z.B. einem Aminoharz, beschichtet bzw. verkapselt (vgl. die Fig. 9B), wie es insbesondere für die Anwendung der ADN-Partikel in Festtreibstoffen oft erwünscht ist, wobei in der Fig. 9B erkennbar ist, dass auch die verkapselten ADN-Partikel eine kompakte, nahezu sphärisch und agglomerationsfreie Morphologie besitzen und sich in idealer Weise als Oxidator für Festtreibstoffe anbieten.

In den Ausführungsbeispielen 10 und 11 wurden gemäß Schritt (a) des erfindungsgemäßen Verfahrens einerseits 5 g Kaliumdinitramid (KDN) in 20 g einer Lösungsmittelmischung aus 5 Mass.-% Ammomiak und 95 Mass.-% Wasser (Beispiel 10), andererseits 5 g Guanylureadinitramid (GUDN) in 125 g einer Lösungsmittelmischung aus 25 Mass.-% Ammomiak und 75 Mass.% Wasser (Beispiel 11) gelöst. Die auf diese Weise erhaltenen Lösungen wurden sodann gemäß Schritt (b) jeweils bei Umgebungsdruck getrennt voneinander auf den Einschüben einer Gefriertrocknungsanlage auf eine Temperatur von etwa -35°C abgekühlt, um die Lösungsmittelmischungen vollständig zu Platten zu erstarren und Partikel aus KDN bzw. aus GUDN auszukristallisieren. Hierbei wurde wiederum beobachtet, dass die Lösungen unter Bildung eines heterogenen Dreiphasengemisches (KDN, Wasser, Ammoniak bzw. GUDN, Wasser, Ammoniak) in die feste Phase überführt werden.

Anschließend wurden die in der festen Phase vorliegenden Lösungsmittelmischungen gemäß Schritt (c) unter langsamer Erhöhung der Temperatur von etwa -35°C auf etwa -15°C über einen Zeitraum von 48°h jeweils im Wesentlichen vollständig sublimiert, um die Partikel aus KDN (Beispiel 10) bzw. GUDN (Beispiel 11) zu erhalten, indem ein Vakuum von etwa 2 mbar angelegt wurde.

In der nachfolgenden Tabelle sind die wesentlichen Verfahrensparameter der Ausführungsbeispiele 10 und 11 stichpunktartig wiedergegeben:

| **Beispiel** | Dinitramid | Anteil NH₃ in H₂O [Mass.-%] | Anteil Dinitramid in NH₃/H₂O [Mass.-%] | Verfahrensführung |
|---|---|---|---|---|
| 10 | KDN | 5 | 50/50 | vollständige Sublimation |
| 11 | GUDN | 25 | 50/50 | vollständige Sublimation |

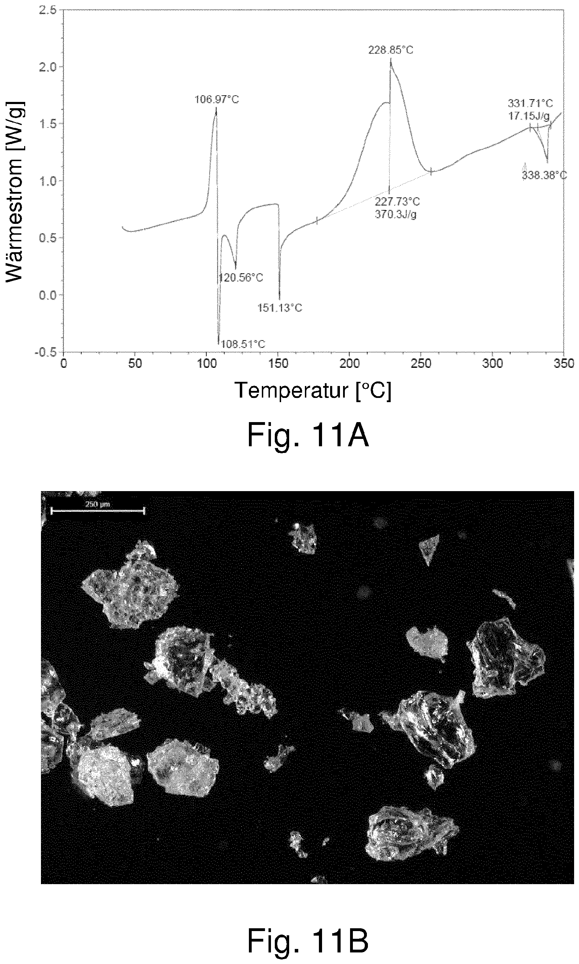

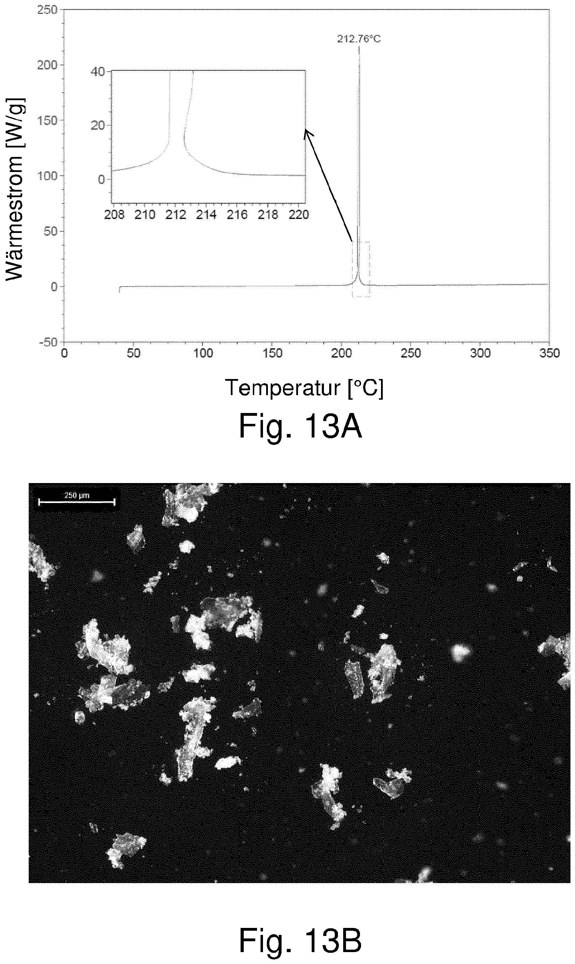

Die auf diese Weise erhaltenen Partikel aus KDN (Beispiel 10) bzw. aus GUDN (Beispiel 11) wurden wiederum mittels Mikroskopie *(LEICA Z17 APO)* untersucht (vgl. die Fig. 11B für KDN bzw. die Fig. 13B für GUDN), wobei im Gegensatz zu den entsprechenden Rohmaterialien (vgl. die Fig. 12B für das KDN-Rohmaterial bzw. die Fig. 14B für das GUDN-Rohmaterial) abgerundete und agglomerationsfreie Partikel mit kompakter Morphologie erhalten wurden.

Darüber hinaus wurden auch die auf diese Weise erhaltenen Partikel aus KDN und GUDN mittels dynamischer Differenzkalorimetrie (DSC) bei einer Heizrate von 5°C/min untersucht (vgl. die Fig. 11A und 13A). Dabei zeigen einerseits die gemäß dem Ausführungsbeispiel 10 erzeugten KDN-Partikel (vgl. die Fig. 11A) im Vergleich mit dem KDN-Rohmaterial (vgl. die Fig. 12A) einander entsprechende Schmelzpeaks sowie identische Verteilungen der den thermischen Zerfall von KDN sowie dessen Zersetzungsprodukte identifizierenden Peaks; andererseits weisen die gemäß dem Ausführungsbeispiel 11 erhaltenen GUDN-Partikel einen ausgeprägten, diskreten Schmelzpeak bei etwa 213°C auf (vgl. die Fig. 13A), wie es praktisch identisch dem GUDN-Rohmaterial (vgl. die Fig. 14A) entspricht.

## Patentansprüche

1. Verfahren zur Herstellung von Partikeln aus Oxidatorsalzen aus der Gruppe der Dinitramide, umfassend die folgenden Schritte:
(a) Lösen des Dinitramids in wenigstens einem Lösungsmittel aus der Gruppe Wasser und Ammoniak unter Erhalt einer Lösung des Dinitramids;
(b) anschließendes Abkühlen der Lösung des Dinitramids auf eine Temperatur unterhalb des Gefrierpunktes des wenigstens einen Lösungsmittels, so dass das wenigstens eine Lösungsmittel in fester Phase vorliegt, um die Partikel des Dinitramids auszukristallisieren; und
(c) anschließendes Sublimieren von zumindest einem Anteil des wenigstens einen, in der festen Phase vorliegenden Lösungsmittels, um die Partikel des Dinitramids zu erhalten.

2. Verfahren nach Anspruch 1, **dadurch gekennzeichnet, dass** gemäß Schritt (a) eine im Wesentlichen gesättigte Lösung des Dinitramids in dem wenigstens einen Lösungsmittel erzeugt wird.

3. Verfahren nach Anspruch 1 oder 2, **dadurch gekennzeichnet, dass** das Abkühlen der Lösung des Dinitramids auf eine Temperatur unterhalb des Gefrierpunktes des wenigstens einen Lösungsmittels unter Erhalt der erstarrten Lösung des Dinitramids gemäß Schritt (b) bei Umgebungsdruck oder bei einem demgegenüber erhöhten Druck erfolgt.

4. Verfahren nach einem der Ansprüche 1 bis 3, **dadurch gekennzeichnet, dass** der zumindest eine Anteil des wenigstens einen, in der festen Phase vorliegenden Lösungsmittels gemäß Schritt (c) durch Anlegen eines Unterdruckes gegenüber der Umgebung sublimiert wird.

5. Verfahren nach einem der Ansprüche 1 bis 4, **dadurch gekennzeichnet, dass** das wenigstens eine Lösungsmittel gemäß Schritt (c) im Wesentlichen vollständig sublimiert wird.

6. Verfahren nach Anspruch 5, **dadurch gekennzeichnet, dass** der Unterdruck und/oder die Temperatur derart eingestellt wird, dass sich das wenigstens eine Lösungsmittel unmittelbar unterhalb seines Phasenübergangs von der festen in die flüssige Phase befindet.

7. Verfahren nach Anspruch 5 oder 6, **dadurch gekennzeichnet, dass** die gemäß Schritt (c) erhaltenen Partikel des Dinitramids nach dem Sublimieren des wenigstens einen Lösungsmittels in wenigstens einem organischen Lösungsmittel gewaschen werden, wobei sie insbesondere zunächst in wenigstens einem ersten polaren organischen Lösungsmittel und sodann in wenigstens einem zweiten unpolaren organischen Lösungsmittel gewaschen werden.

8. Verfahren nach einem der Ansprüche 1 bis 4, **dadurch gekennzeichnet, dass** nur ein Anteil des wenigstens einen Lösungsmittels gemäß Schritt (c) sublimiert wird, wonach
- ein weiterer Anteil des wenigstens einen Lösungsmittels, insbesondere durch Erhöhen des Unterdruckes auf ein Druckniveau und/oder durch Erhöhen der Temperatur auf ein Temperaturniveau, bei welchem das wenigstens eine Lösungsmittel in der flüssigen Phase vorliegt, verdampft wird; und/oder
- die erhaltenen Partikel des Dinitramids nach dem Sublimieren des Anteils des wenigstens einen Lösungsmittels und gegebenenfalls nach Verdampfen des weiteren Anteils des wenigstens einen Lösungsmittels in wenigstens einem organischen Lösungsmittel gewaschen werden, wobei sie insbesondere zunächst in wenigstens einem ersten polaren organischen Lösungsmittel und sodann in wenigstens einem zweiten unpolaren organischen Lösungsmittel gewaschen werden.

9. Verfahren nach einem der Ansprüche 1 bis 8, **dadurch gekennzeichnet, dass** das Dinitramid gemäß Schritt (a) in einer Lösungsmittelmischung aus wenigstens zwei Lösungsmitteln mit unterschiedlichen Gefrierpunkten, insbesondere in Form von Wasser und Ammoniak, gelöst wird.

10. Verfahren nach Anspruch 9, **dadurch gekennzeichnet, dass** alle Lösungsmittel der Lösungsmittelmischung gemäß Schritt (c) im Wesentlichen vollständig sublimiert werden.

11. Verfahren nach Anspruch 10, **dadurch gekennzeichnet, dass** der Unterdruck und/oder die Temperatur derart eingestellt wird, dass sich das Lösungsmittel der Lösungsmittelmischung, welches den niedrigsten Gefrierpunkt aufweist, unmittelbar unterhalb seines Phasenübergangs von der festen und der flüssigen Phase befindet.

12. Verfahren nach Anspruch 10 oder 11, **dadurch gekennzeichnet, dass** die gemäß Schritt (c) erhaltenen Partikel des Dinitramids nach dem Sublimieren der Lösungsmittelmischung in wenigstens einem organischen Lösungsmittel gewaschen werden, wobei sie insbesondere zunächst in wenigstens einem ersten polaren organischen Lösungsmittel und sodann in wenigstens einem zweiten unpolaren organischen Lösungsmittel gewaschen werden.

13. Verfahren nach Anspruch 9, **dadurch gekennzeichnet, dass** nur wenigstens ein Lösungsmittel der Lösungsmittelmischung mit niedrigem Gefrierpunkt gemäß Schritt (c) im Wesentlichen vollständig sublimiert wird, wonach
- zumindest ein Anteil des wenigstens einen weiteren Lösungsmittels der Lösungsmittelmischung mit demgegenüber höherem Gefrierpunkt, insbesondere durch Erhöhen des Unterdruckes auf ein Druckniveau und/oder durch Erhöhen der Temperatur auf ein Temperaturniveau, bei welchem das Lösungsmittel mit höherem Gefrierpunkt in der flüssigen Phase vorliegt, verdampft wird; und/oder
- die erhaltenen Partikel des Dinitramids nach dem Sublimieren zumindest des wenigstens einen Lösungsmittels der Lösungsmittelmischung mit niedrigerem Gefrierpunkt und gegebenenfalls nach Verdampfen des Anteils des wenigstens einen weiteren Lösungsmittels der Lösungsmittelmischung mit demgegenüber höheren Gefrierpunkt in wenigstens einem organischen Lösungsmittel gewaschen werden, wobei sie insbesondere zunächst in wenigstens einem ersten polaren organischen Lösungsmittel und sodann in wenigstens einem zweiten unpolaren organischen Lösungsmittel gewaschen werden.

14. Verfahren nach einem der Ansprüche 1 bis 13, **dadurch gekennzeichnet, dass** dem wenigstens einen Lösungsmittel gemäß Schritt (a) wenigstens ein Additiv, insbesondere aus der Gruppe der Stabilisatoren, Tenside, Emulgatoren und Antibackmittel, zugesetzt wird.

15. Verfahren nach einem der Ansprüche 1 bis 14, **dadurch gekennzeichnet, dass** es sich bei dem Dinitramid um ein solches aus der Gruppe Ammoniumdinitramid (ADN), Kaliumdinitramid (KDN) und N-Guanylureadinitramid (GUDN bzw. FOX-12) handelt.
